# EUROPEAN PATENT APPLICATION

(11) **EP 4 741 210 A1**
(43) Date of publication of application: **13.05.2026**
(21) Application number: 25211991.2
(22) Date of filing: 29.10.2025
(51) Int. Cl.: B60L 3/12, B60K 1/02, B60L 15/20, B60W 30/19

(54) **METHOD, APPARATUS, CONTROLLER, VEHICLE AND PROGRAM PRODUCT FOR CONTROLLING VEHICLE**

(30) Priority: 11.11.2024 CN 202411603993
(71) Applicant: Robert Bosch GmbH, 70442 Stuttgart (DE)
(72) Inventor: ZHANG, Hantian, Jiangsu, 214000 (CN)

(57) **Abstract**

Examples of the present disclosure relate to a method, an apparatus, a controller, a vehicle, and a computer program product for controlling a vehicle. The method includes determining a target torque provided by a first motor in a first electric drive axle in response to the first electric drive axle of a plurality of electric drive axles of the vehicle performing a gearing operation. The method further comprises adjusting a torque provided by a second motor in a second electric drive axle of the plurality of electric drive axles not performing a gearing operation based on the target torque. The method further comprises controlling the vehicle based on the target torque and the adjusted torque. Through the method of the embodiment of the present disclosure, torque compensation can be provided by the other electric drive axles while one of the plurality of electric drive axles shifts gears, so that the power transitions smoothly during the gearing without power interruption, thereby increasing vehicle driving comfort, power and safety.

## Description

### Technical Field

Examples of the present disclosure generally relate to the field of vehicle control, and specifically to a method, an apparatus, a controller, a vehicle, and a program product for controlling a vehicle.

### Background Art

As technology has developed, automobiles have also started to use electric energy as a source of power. Since the advantages of electric vehicles are particularly evident, the electric vehicles are also developing particularly rapidly. For example, in environmental conservation, electric vehicles can achieve zero emissions and high energy efficiency. In addition, the operational costs of electric vehicles are lower due to lower energy and maintenance costs. In addition, electric vehicles use electric motors to control their speed, so they accelerate fast and make little noise.

With the rapid development of batteries and power systems, the power and performance of electric vehicles are constantly improving. Moreover, with the development of vehicle control technology, the control of electric vehicles is becoming more and more intelligent. As a result, electric vehicles are beginning to be accepted by more and more users and have become an important vehicle for people to travel or transport cargo.

### Summary of the Invention

Embodiments of the present disclosure provide a method, an apparatus, a controller, a vehicle, and a program product for controlling a vehicle.

According to a first aspect of the present disclosure, a method for controlling a vehicle is provided. The method includes determining a target torque provided by a first motor in a first electric drive axle in response to the first electric drive axle of a plurality of electric drive axles of the vehicle performing a gearing operation. The method further comprises adjusting a torque provided by a second motor in a second electric drive axle of the plurality of electric drive axles not performing a gearing operation based on the target torque. The method further comprises controlling the vehicle based on the target torque and the adjusted torque.

According to a second aspect of the present disclosure, an apparatus for controlling a vehicle is provided. The apparatus includes a target torque determination module configured to determine a target torque provided by a first motor in a first electric drive axle in response to the first electric drive axle of a plurality of electric drive axles of the vehicle performing a gearing operation; a torque adjustment module configured to adjust a torque provided by a second motor in a second electric drive axle of the plurality of electric drive axles not performing a gearing operation based on the target torque; and a vehicle control module configured to control the vehicle based on the target torque and the adjusted torque.

According to a third aspect of the present disclosure, a controller is provided. The controller comprises at least one processor, and a memory coupled to the at least one processor and having instructions stored thereon that, when executed by the at least one processor, cause the controller to perform steps of the method of the first aspect of the present disclosure.

According to a fourth aspect of the present disclosure, a vehicle is provided. The vehicle comprises a first electric drive axle, a second electric drive axle, and a controller in the third aspect of the present disclosure.

According to a fifth aspect of the present disclosure, a machine program product is provided. The machine program product comprises machine-executable instructions, wherein the machine-executable instructions are executed by a processor to implement the steps of the method in the first aspect of the present disclosure.

### Brief Description of the Drawings

FIG. 1 is a schematic diagram of an exemplary environment in which a device and/or method according to some examples of the present disclosure may be implemented;
FIG. 2 is a schematic diagram of an exemplary method for controlling a vehicle according to some examples of the present disclosure;
FIG. 3 is a schematic view of an exemplary process for adjusting a torque according to some examples of the present disclosure;
FIG. 4 is a schematic diagram of an exemplary architecture for controlling a vehicle according to some examples of the present disclosure;
FIG. 5 is a schematic diagram of a change in torque according to some embodiments of the present disclosure;
FIG. 6 is a schematic diagram of an apparatus for controlling a vehicle according to some examples of the present disclosure;
FIG. 7 is a schematic block diagram of an exemplary device suitable for implementing some examples of the present disclosure.

In the various accompanying drawings, the same or corresponding numbers represent the same or corresponding portions.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first", "second", etc. may refer to different or the same object. The text below may comprise other specific and implicit meanings.

Automated Manual Transmission (AMT) is commonly used in the field of new energy commercial vehicles to control the gearing operation of vehicles. In an electric AMT transmission, in order to reduce noise, it is necessary to reduce the positive pressure and friction between two binding teeth during the shifting out of gear and gearing processes, so a method of controlling motor torque reduction is generally used before gearing. As a result, the motor torque is reduced to zero Nm at the beginning of the gear shift, causing a power interruption. Power interruption refers to a temporary loss of power in the vehicle causing a jerk during the gear change process. The power interruption caused by gear change may lead to poor driving comfort of the vehicle, and even affect the power and safety of the vehicle. For example, the loss of power during the gearing period will lead to a jerk in driving and a deterioration in driving experience. Further, the loss of power during the gearing period will also lead to poor acceleration of the vehicle and the deterioration of power of the vehicle. In addition, the loss of power during the gearing period will also lead to poor climbing performance and reduced vehicle safety.

To this end, embodiments of the present disclosure provide a method for controlling a vehicle. In the method, the controller determines a target torque provided by a first motor in a first electric drive axle when the first electric drive axle of a plurality of electric drive axles of the vehicle is to perform a gearing operation. The controller then adjusts a torque provided by a second motor in a second electric drive axle of the plurality of electric drive axles not performing a gearing operation according to the target torque. Next, the controller utilizes the target torque and the adjusted torque to control the vehicle to complete the gearing operation. In the above manner, torque compensation can be provided by the other electric drive axles while one of the plurality of electric drive axles shifts gears, so that the power transitions smoothly during the gearing without power interruption, thereby increasing vehicle driving comfort, power and safety.

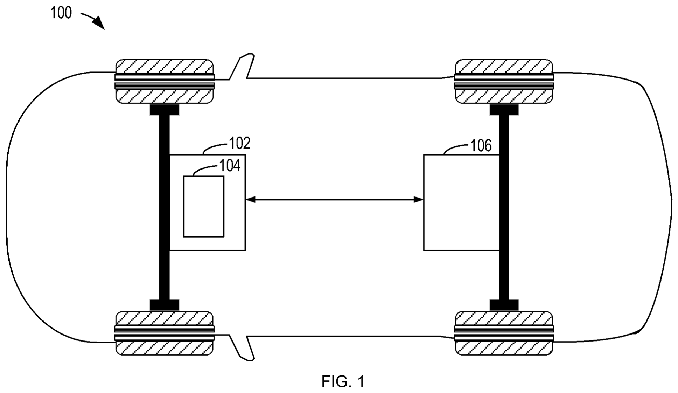

Examples of the present disclosure will be described in further detail below in conjunction with the accompanying drawings, wherein FIG. 1 illustrates an exemplary environment in which the device and/or method according to the examples of the present disclosure may be implemented. A vehicle 100 is shown in FIG. 1. The vehicle 100 includes two electric displacement bridges: a first electric drive axle 102 and a second electric drive axle 106. In one example, the vehicle 100 is an electric vehicle. Additionally, the vehicle 100 is an electric heavy truck.

As shown in FIG. 1, the vehicle 100 has two axles. The first electric drive axle 102 may be coupled to a front axle of the vehicle 102 to control wheel rotation of the front axle of the vehicle. The second electric drive axle 106 may be coupled to a rear axle of the vehicle to control wheel rotation of the rear axle of the vehicle. FIG. 1 is an example only, not a specific limitation of the present disclosure. When the vehicle 100 is an electric heavy truck, it may have a plurality of axles, such as a front axle, an intermediate axle, and a rear axle. At this point, the first electric drive axle 102 may be coupled to the intermediate axle to control the wheel rotation of the intermediate axle. The second electric drive axle 106 may be coupled with the rear axle to control the rolling of the rear axle wheel. The above examples are intended only to describe the present disclosure and are not a specific limitation of the present disclosure. Those skilled in the art may provide for the connection between an electric drive axle and the axle in the vehicle as needed. For example, the first electric drive axle 102 is coupled to the rear axle of the vehicle to control wheel rotation of the rear axle of the vehicle; the second electric drive axle 106 is coupled to the front axle of the vehicle to control wheel rotation of the front axle of the vehicle.

In addition, FIG. 1 shows that the vehicle 100 has two electric drive axles, which is only an example and not a specific limitation of the present disclosure. The vehicle 100 may have a plurality of axles, and thus it may have a plurality of electric drive axles.

The electric drive axle 102 may have a motor and a gearbox, wherein the motor is used to power the vehicle, and the gearbox is used to provide a gear control operation, such as a gear change operation, for the vehicle. The first electric drive axle 102 may also have a controller 104 for controlling a gearing operation of the first electric drive axle 102 and the second electric drive axle 106. For example, the first electric drive axle 102 is a master electric drive axle and the second electric drive axle 106 is a slave electric drive axle. The first electric drive axle 102 and the second electric drive axle 106 may complete a gearing operation under the control of the controller 104. The above examples are intended only to describe the present disclosure and are not a specific limitation of the present disclosure. In another example, the second electric drive axle 106 is a master electric drive axle, and the first electric drive axle 102 is a slave electric drive axle. The gearing operations of the first electric drive axle 102 and the second electric drive axle 106 are controlled by a controller in the second electric drive axle 106. Where the vehicle 100 has a plurality of electric drive axles, one of the electric drive axles may be selected as the master electric drive axle, and the other of the electric drive axles are slave electric drive axles.

FIG. 1 shows a gearing operation of the first electric drive axle 102 and the second electric drive axle 106 controlled by the controller 104 in the first electric drive axle 102. This is just an example, and the function of controlling the gear change may also be implemented by a domain controller or a vehicle controller within the vehicle 100.

When the vehicle 100 performs a gearing operation, in order to avoid power interruption of the vehicle during gear shifting, the first electric drive axle 102 and the second electric drive axle 106 do not simultaneously perform the gearing operation, but perform the gearing operation separately. For example, when the first electric drive axle 102 performs a gearing operation, the second electric drive axle 106 may not perform a gearing operation but instead continue to perform the original operation and, as much as possible, increase the output torque to compensate for the reduced torque of the first electric drive axle, thereby providing sufficient power to the vehicle 100. After the first electric drive axle 102 completes the gearing operation, the second electric drive axle 106 begins to perform the gearing operation. At this point, the first electric drive axle 102 no longer performs the gearing operation, may provide power to the vehicle, and can possibly increase the output torque to compensate for the reduced torque due to the gearing operation of the second electric drive axle. Thus, in a vehicle performing a gearing operation, when one of the electric drive axles is shifting gears, the other electric drive axles may be controlled to increase the torque output by the motor to compensate for the reduction in torque caused by the electric drive axle performing the gearing operation, thereby avoiding the effects of the power reduction on the vehicle when one electric drive axle performs the gearing operation.

Additionally, when the vehicle 100 has a plurality of electric drive axles, while some of the electric drive axles are performing a gearing operation, the other electric drive axles may not perform a gearing operation. Also, as described above, an electric drive axle that does not perform a gearing operation can increase the output torque to compensate for the reduced torque of the electric drive axle that performs a gearing operation, such that the vehicle can achieve a smooth transition of the power during the gearing operation.

By way of this method, the control of the vehicle having a plurality of electric drive axles achieves alternating gear shifting among the electric drive axles and torque compensation, and the power can be smoothly transitioned during the gearing without power interruption, thereby increasing vehicle driving comfort, power and safety.

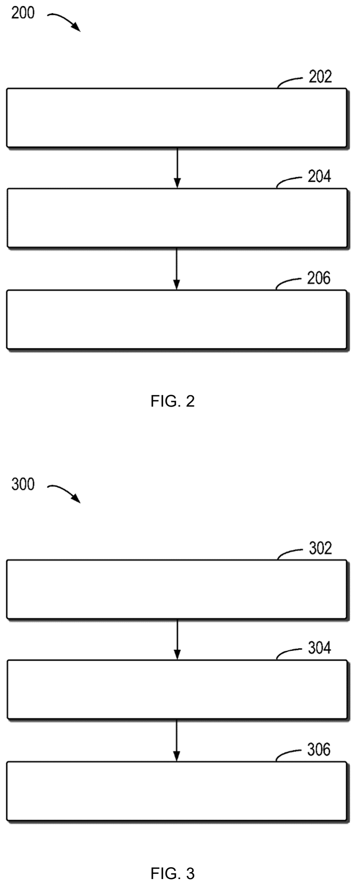

The above, in conjunction with FIG. 1, describes an exemplary environment in which some examples of the present disclosure may be implemented. A schematic diagram of an exemplary method for controlling a vehicle according to some examples of the present disclosure is described below in conjunction with FIG. 2. The method shown in FIG. 2 may be executed in the environment shown in FIG. 1 or any suitable environment, for example, by the controller 104 in FIG. 1 or any suitable computing device.

As shown in the process 200 of FIG. 2, at block 202, the controller 104 determines a target torque provided by a first motor in the first electric drive axle 102 in response to the first electric drive axle 102 of the plurality of electric drive axles of the vehicle performing a gearing operation. When the vehicle 100 having a plurality electric drive axles performs a gearing operation, rather than simultaneously performing a gearing operation on all of the electric drive axles, the plurality of electric drive axles are controlled to perform a gearing operation alternately. For convenience of description, the target torque of the first motor in the first electric drive axle may also sometimes be referred to as the first torque.

For example, when the vehicle 100 is to perform a gearing operation, it may first be determined that a gearing operation is to be performed on the first electric drive axle 102. At this point, the controller 104 may determine a target torque provided by a first motor in the first electric drive axle 102, such as a detected target torque of the motor or a target torque calculated by a predetermined calculation formula, for example, calculating from a torque constant and a current. Here, the target torque is motor torque, and the motor torque is the output torque of the motor, also referred to as motor torque, and is related to the output power of the motor.

At block 204, based on the target torque, the controller 104 adjusts the torque provided by a second motor in the second electric drive axle 106 not performing a gearing operation among the plurality of electric drive axles. Upon determining the target torque provided by the first motor in the first electric drive axle 102 during gear shifting, it is necessary to compensate for the reduction in torque of the first motor by adjusting the torque of the second motor in the second electric drive axle 106.

In some embodiments, the controller 104 also needs to obtain a total wheel end torque for driving the vehicle 100 in adjusting the torque provided by the second motor in the second electric drive axle 106. In an example, the controller 104 may receive a total wheel end torque for driving the vehicle 100 from a vehicle controller. For example, the vehicle controller calculates the total wheel end torque by calculating the wheel end torque of each axle and then summing the wheel end torques. In another example, the controller 104 may also calculate the total wheel end torque in real time. The controller 104 may then calculate the torque to be provided by the second motor in the second electric drive axle using the total wheel end torque obtained and in combination with the determined target torque for the first motor. This process may be described below in connection with FIG. 3.

At block 206, the controller 104 controls the vehicle 100 based on the target torque and the adjusted torque. The controller 104 may control the axle connected to the first electric drive axle using the target torque at this time and control the axle connected to the second electric drive axle using the adjusted torque for the second motor, thereby controlling the operation of the vehicle. At this point, the first motor of the first electric drive axle 102 outputs the first torque and the second motor of the second electric drive axle 106 outputs the adjusted torque. As the first torque gradually decreases, the output torque of the second motor gradually increases to ensure that the total wheel end torque of the vehicle remains as constant as possible.

Upon completion of the gearing operation of the first electric drive axle 102, the controller 104 may control the second electric drive axle 106 to perform a gearing operation. When the second electric drive axle 106 performs a gearing operation, it is controlled similarly to the control process of the first electric drive axle 102 performing a gear shifting operation. In this process, it is also desirable to adjust the change in torque in the first motor in the first electric drive axle according to the change in torque of the second motor in the second electric drive axle. For example, while the torque of the second motor is decreasing, the motor torque output by the first motor is increased.

Through the method of the embodiment of the present disclosure, torque compensation can be provided by the other electric drive axles while one of the plurality of electric drive axles shifts gears, so that the power transitions smoothly during the gearing without power interruption, thereby increasing vehicle driving comfort, power and safety.

A schematic diagram of an exemplary method for controlling a vehicle according to some embodiments of the present disclosure has been described above in connection with FIG. 2, and a schematic diagram of an exemplary process for adjusting a torque in accordance with some embodiments of the present disclosure will be described below in connection with FIG. 3. The process shown in FIG. 3 may be executed in the environment shown in FIG. 1 or any suitable environment, for example, by the controller 104 in FIG. 1 or any suitable computing device.

The process of adjusting the torque provided by the second motor in the second electric drive axle 106 based on the total wheel end torque and the target torque is described below in connection with an example 300. At block 302, the controller 104 determines a first gear that is being used in the first electric drive axle 102. In order to determine the wheel end torque provided by the first electric drive axle 102, it is necessary to first determine the gear being used in the first electric drive axle. In the vehicle 100, different gears correspond to different speed ratios. The speed ratio, also referred to as the automobile transmission ratio, refers to the ratio of the speeds of two transmission mechanisms before and after the transmission in an automobile transmission system. For example, in the case of a 3-speed transmission, the speed ratio of the first gear may be 10, the speed ratio of the second gear may be 6, and the speed ratio of the third gear may be 3.

At block 304, the controller 104 determines a first wheel end torque provided by the first electric drive axle based on the first gear and the target torque. Upon determining the first gear in the first electric drive axle, the controller 104 may further determine the first wheel end torque provided by the first electric drive axle. For example, the controller 104 may utilize the first gear in the determined first electric drive axle to determine a first speed ratio for the first gear. For example, the gear position in the first electric drive axle is 2nd gear, and at this point it can be determined that its corresponding speed ratio is 6. The controller 104 may then utilize the first speed ratio and the target torque to calculate the first wheel end torque provided by the first electric drive axle. For example, by multiplying the first speed ratio by the target torque of the motor, the wheel end torque provided by the first electric drive axle can be calculated. For example, when shifting from the second gear to reduce torque, the target torque of the first motor of the first electric drive axle is 100 Newton·meters (N·m). Since the speed ratio corresponding to the second gear is 6, the first wheel end torque can be calculated to be 600 N·m.

At block 306, the controller 104 adjusts the torque provided by the second motor in the second electric drive axle based on the first wheel end torque and the total wheel end torque. Upon determining the first wheel end torque and the total wheel end torque, a second wheel end torque that needs to be provided by the second electric drive axle may be determined. For example, the total wheel end torque is 2000 N·m, and if the first wheel end torque provided by the first electric drive axle 102 is 600 N·m at this time, the second wheel end torque provided by the second electric drive axle 106 is 1400 N·m. The torque provided by the second motor in the second electric drive axle is then adjusted according to the second wheel end torque required at this time.

In some embodiments, in adjusting the torque provided by the second motor in the second electric drive axle, the controller 104 also needs to further determine the second gear being used in the second electric drive axle 106. For example, the controller 104 may receive the gearing information in the second electric drive axle from the second electric drive axle 106, such as the second electric drive axle being also at the second gear. The controller 104 then adjusts the torque provided by the second motor in the second electric drive axle based on the second wheel end torque and the second gear.

For example, the controller 104 may determine a second speed ratio for the second gear according to the second gear. For each of the electric drive axles, each gear has a corresponding speed ratio, so a speed ratio may be obtained for the second gear at this time. The speed ratio of the gear may be the same or different for different electric drive axles. For example, the speed ratio for the second gear in the second electric drive axle is also 6. The controller 104 then utilizes a second speed ratio and wheel end torque to calculate the second torque to be provided by the second motor of the second electric drive axle 106. For example, the second torque provided by the second motor is determined by dividing the wheel end torque by the second speed ratio, the second torque being the motor torque. The torque provided by the second motor is then adjusted according to the second torque. For example, the motor torque 233 N·m for the second motor is calculated by dividing 1400 N·m by 6.

In some embodiments, the controller 104 may directly adjust the torque to be provided by the second motor to the second torque. In some embodiments, upon determining the second torque, the controller 104 may further determine whether the second torque exceeds the torque actually can be provided by the second motor, e.g., whether the second torque exceeds a threshold torque for the second motor. If the second torque does not exceed the threshold torque, indicating that the torque required at this time does not exceed the torque that the second motor can provide, the torque provided by the second motor in the second electric drive axle may be adjusted to the second torque. If the second torque exceeds the threshold torque, indicating that the motor torque required to be provided by the second motor exceeds the maximum torque that the second motor can provide, the torque provided by the second motor in the second electric drive axle may then be adjusted to the threshold torque. The second electric drive axle then controls the second motor to operate by the threshold torque.

Through the method of the embodiment of the present disclosure, when performing alternating gear shifting operations among a plurality of electric drive axles, torque compensation can be provided by the other electric drive axles while one electric drive axle shifts gears, so that the power transitions smoothly without power interruption during the gearing, thereby increasing vehicle driving comfort, power and safety.

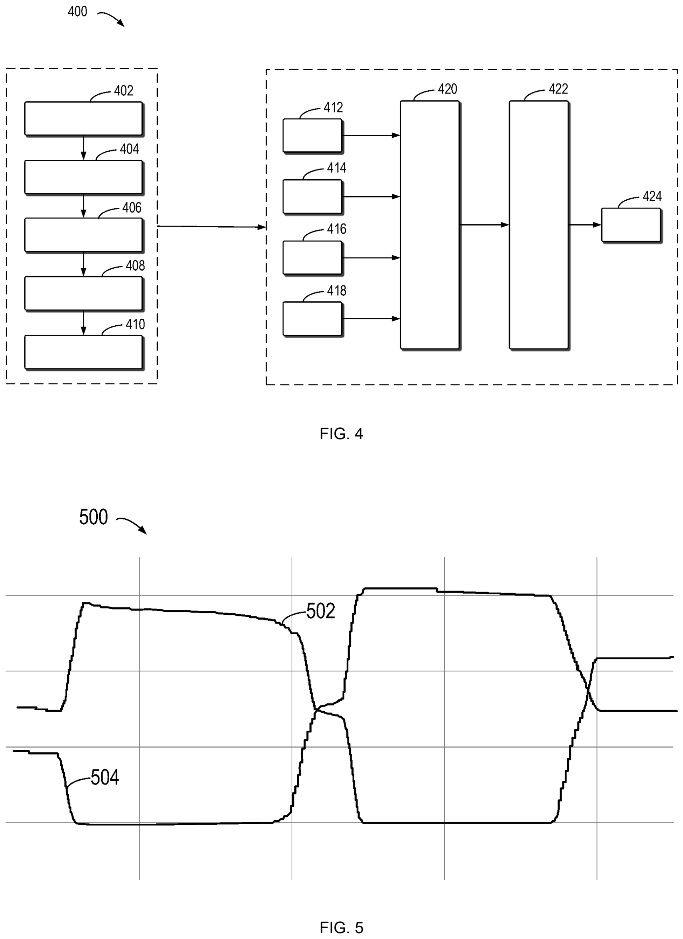

A schematic diagram of an exemplary process for adjusting a torque according to some examples of the present disclosure is described above in connection with FIG. 3. A schematic diagram of an exemplary architecture for controlling a vehicle according to some examples of the present disclosure will be described below in conjunction with FIG. 4.

A gearing process for a first electric drive axle 420, which may be the first electric drive axle 102 of FIG. 1, is described in example 400. At block 402, the controller controls a first motor of the first electric drive axle 420 to perform a torque reduction operation while the vehicle 100 is performing a gearing operation. Then, at block 404, the controller controls the transmission to perform gear disengagement. A speed synchronization operation is performed at block 406. In the speed regulation operation, the controller can control the speed of the motor according to the speed of the ring gear and the speed of the shaft sleeve to synchronize the ring gear and the shaft sleeve. Upon speed synchronization, at block 408, the controller controls the transmission to perform a gear shifting operation. After the completion of the gear shifting operation, at block 410, the controller controls the motor to perform a torque increase to restore torque. This completes the gearing operation.

Throughout the gearing process, the first electric drive axle 420 receives a total wheel end torque 412 from the vehicle controller and also determines a motor torque 414 provided by the motor in the first electric drive axle 420. In addition, the first electric drive axle 420 also obtains a gear position 416 of the transmission in the first electric drive axle and a torque limit 418 for the second motor, that is, the maximum torque that the second motor can provide, in the second electric drive axle 422. The second electric drive axle 422 may be the second electric drive axle 406 in FIG. 1.

The controller may then determine the wheel end torque provided by the first electric drive axle 420 based on the motor torque 414 provided by the motor in the first electric drive axle 420 and the gear position of the transmission in the first electric drive axle 420. The controller of the first electric drive axle 420 then calculates the wheel end torque required to be provided by the second electric drive axle 422 based on the total wheel end torque 412 and the wheel end torque provided by the first electric drive axle 420. In addition, the controller of the first electric drive axle 420 may also receive information about the gear position processed by the transmission from the second electric drive axle 422. Accordingly, the controller may calculate the torque required to be provided by the motor of the second electric drive axle 422 according to the wheel end torque required to be provided by the second electric drive axle 422 and the gear position for the second electric drive axle. The calculated torque is then compared to the torque limit 418. If the calculated torque is less than or equal to the torque limit 418, the calculated torque is input into the second electric drive axle 422 to control an output torque 424 of the motor of the second electric drive axle 422. At this point, the output torque 424 is the calculated torque. If the calculated torque is greater than the torque limit 418, the torque limit is input to the second electric drive axle 422 such that the motor of the second electric drive axle 422 outputs the output torque 424 equal to the torque limit. After controlling the gearing operation of the first electric drive axle 420, the gearing operation of the second electric drive axle 422 is then controlled.

For example, the first electric drive axle 420 and the second electric drive axle 422 are controlled to shift gears alternately when the gear shifting is to be triggered by a gear distribution function. For example, the first electric drive axle 420 and the second electric drive axle 422 are both currently at the second gear. When a shift to third gear is required, the first electric drive axle 420 is first controlled to shift to the third gear. After the completion of gear shifting of the first electric drive axle 420, the second electric drive axle 422 is controlled to shift to the third gear.

When the first electric drive axle 420 shifts gears, the controller requests the torque of the motor of the first electric drive axle 420 and multiplies it by the transmission system speed ratio to obtain the wheel end torque of the first electric drive axle 420 during the gear shifting. For example, during a gear shift to reduce the torque, the first electric drive axle requests a motor torque of 100 N·m, which will gradually decrease to 0. Multiplying it by the speed ratio 100 yields a wheel end torque that gradually decreases from 10000 N·m to 0. The total wheel end torque requested from the vehicle controller is then used to subtract the calculated wheel end torque of the first electric drive axle 420 to obtain the torque that needs to be run on the other electric drive axle. For example, if the total wheel end torque currently requested from the vehicle controller is 20000 N·m, the wheel end torque needs to be gradually increased to 20000 N·m on the second electric drive axle 422. Next, the 20000 N·m wheel end torque required for the second electric drive axle is converted to the motor end torque and the maximum torque limit is applied. The peak torque of the motor needs to be considered when limiting to prevent the second electric drive axle 422 from wheel slippage due to excessive torque. At the same time, filtering is applied to the motor torque to make it smoother.

Through the method of the embodiment of the present disclosure, when performing alternating gear shifting operations among a plurality of electric drive axles, torque compensation can be provided by the other electric drive axles while one electric drive axle shifts gears, so that the power transitions smoothly without power interruption during the gearing, thereby increasing vehicle driving comfort, power and safety.

A schematic diagram of an exemplary architecture for controlling a vehicle according to some examples of the present disclosure is described above in connection with FIG. 4, and a schematic diagram of a change in torque according to some embodiments of the present disclosure will be described below in connection with FIG. 5.

In example 500, a curve 504 describes a change in motor torque of the first motor provided by the first electric drive axle 102; and a curve 502 describes a change in motor torque provided by the second motor of the second electric drive axle 106. The two electric drive axles shift gears alternately. When the first electric drive axle 102 shifts gears, the increased torque of the motor of the second electric drive axle 106 may compensate for the reduced torque of the motor of the first electric drive axle 102. When the second electric drive axle 106 shifts gears, the increased torque of the motor of the first electric drive axle 102 may compensate for the reduced torque of the motor of the second electric drive axle 106.

As shown in the curve 504, when the first electric drive axle 102 performs a gearing operation, the motor torque of the first motor gradually decreases and the torque output by the motor of the second electric drive axle 106 gradually increases. After a period of power interruption, the first electric drive axle 102 completes the gearing operation and the torque output by the motor gradually increases. At this point, the torque output by the motor of the second electric drive axle 106 shown by the curve 502 gradually decreases, thereby reducing the amount of compensation output by the motor of the second electric drive axle. Upon completion of the gearing operation of the first electric drive axle, the second electric drive axle begins a gearing operation. At this point, the torque output by the motor of the first electric drive axle compensates for the reduced torque of the motor of the second electric drive axle.

As shown in the curve 502, when the second electric drive axle 106 performs a gearing operation, the output torque of the motor of the second electric drive axle 106 is reduced and the torque output by the motor of the first electric drive axle 102 gradually increases to compensate for the reduced torque of the motor of the second electric drive axle 106. Upon completion of the gearing operation in the second electric drive axle 106, the torque of the motor of the second electric drive axle 106 begins to recover and the torque of the motor output of the first electric drive axle 102 is progressively reduced until the second electric drive axle 106 completes the gearing operation. By controlling the two electric drive axles in a dual electric drive axle vehicle to shift gear alternately and compensate for the torque, while increasing limiting and filtering the compensation torque, the power transitions smoothly during the gear shift without power interruption.

Thus, when performing alternating gear shifting operations among a plurality of electric drive axles, torque compensation can be provided by the other electric drive axles while one electric drive axle shifts gears, thereby increasing vehicle driving comfort, power and safety.

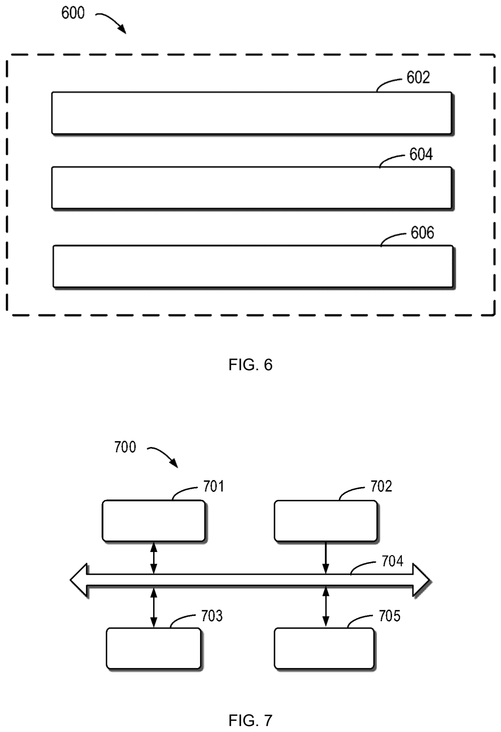

FIG. 6 further illustrates a schematic diagram of an apparatus for controlling a vehicle according to examples of the present disclosure. An apparatus 600 may be applied to the controller 104, and the apparatus may comprise a plurality of modules for performing the corresponding steps in the method 200 discussed in FIG. 2. As shown in FIG. 6, the apparatus 600 includes a target torque determination module 602 configured to determine a target torque provided by a first motor in a first electric drive axle in response to the first electric drive axle of a plurality of electric drive axles of the vehicle performing a gearing operation; a torque adjustment module 604 configured to adjust a torque provided by a second motor in a second electric drive axle of the plurality of electric drive axles not performing a gearing operation based on the target torque; and a vehicle control module 606 configured to control the vehicle based on the target torque and the adjusted torque.

In some examples, the torque adjustment module 604 includes: a total wheel end torque acquisition module configured to acquire a total wheel end torque for driving a vehicle, and a first adjustment module configured to adjust a torque provided by a second motor in a second electric drive axle based on the total wheel end torque and a target torque.

In some embodiments, the total wheel end torque acquisition module includes a torque receiving module configured to receive the total wheel end torque for driving the vehicle from a vehicle controller of the vehicle.

In some examples, the first adjustment module comprises: a first gear determination module configured to determine a first gear being used in a first electric drive axle; a first wheel end torque determination module configured to determine a first wheel end torque provided by the first electric drive axle based on the first gear and a target torque; and a second adjustment module configured to adjust a torque provided by a second motor in a second electric drive axle based on the first wheel end torque and a total wheel end torque.

In some examples, the first wheel end torque determination module comprises: a first speed ratio determination module configured to determine a first speed ratio for a first gear based on the first gear, and a wheel end torque determination module configured to determine a first wheel end torque provided by a first electric drive axle based on the first speed ratio and a target torque.

In some examples, the second adjustment module comprises: a second wheel end torque determination module configured to determine a second wheel end torque that may be provided by the second electric drive axle based on the first wheel end torque and the total wheel end torque, and a third adjustment module configured to adjust a torque provided by the second motor in the second electric drive axle based on the second wheel end torque.

In some examples, the third adjustment module comprises: a second gear determination module configured to determine a second gear being used in the second electric drive axle; and a fourth adjustment module configured to adjust a torque provided by a second motor in the second electric drive axle based on the second wheel end torque and the second gear.

In some embodiments, the target torque is a first torque, and the fourth adjustment module comprises: a second speed ratio determination module configured to determine a second speed ratio for a second gear based on the second gear, and a second torque determination module configured to determine a second torque to be provided by a second motor of the second electric drive axle based on the second speed ratio and a second wheel end torque, and a fifth adjustment module configured to adjust a torque provided by the second motor based on the second torque.

In some examples, the fifth adjustment module comprises: a threshold torque determination module configured to determine whether the second torque exceeds a threshold torque for the second motor, and a second torque adjustment module configured to adjust the torque provided by the second motor in the second electric drive axle to a second torque in response to the second torque not exceeding the threshold torque.

In some examples, the fifth adjustment module further comprises: a third torque adjustment module configured to adjust the torque provided by the second motor in the second electric drive axle to a threshold torque in response to the second torque exceeding the threshold torque.

In some examples, the apparatus 600 further comprises: a gearing operation control module configured to control the second electric drive axle to perform a gearing operation in response to the first electric drive axle completing the gearing operation.

FIG. 7 illustrates a schematic block diagram of an exemplary device 700 that may be used to implement the examples of the present disclosure. The controller 104 of FIG. 1 may be implemented using the device 700. As shown in the figure, the device 700 comprises a central processing unit (CPU) 701, which may execute various appropriate actions and processes according to computer program instructions stored in a read-only memory (ROM) 702 and loaded into a random access memory (RAM) 703. Various programs and data required for the operation of the device 700 may also be stored in the RAM 703. The processor 701, the ROM 702, and the RAM 703 are interconnected through a bus 704. An input/output (I/O) interface 705 is also connected to the bus 704.

The various processes and processing described above, such as the method 200 and the process 300, may be executed by the processor 701. For example, in some examples, the method 200 and the process 300 can be implemented as a computer software program tangibly contained in a machine-readable medium. In some examples, a part or all of the computer programs may be loaded and/or installed onto the device 700 via the ROM 702. When the computer program is loaded onto the RAM 703 and executed by the processor 701, one or more actions of the method 200 and the process 300 described above may be performed.

The present disclosure may be a method, an apparatus, a system and/or a computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network-such as a local area network (LAN) or a wide area network (WAN)-or can be connected to an external computer (for example, through the Internet using an Internet Service Provider). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be supplied to a processing unit of a general-purpose computer, a special-purpose computer, or other programmable data processing apparatus to produce a machine, such that the instructions, when executed by the processing unit of the computer or other programmable data processing apparatus, create an apparatus for implementing the functions/actions specified in one or more blocks of the flowcharts and/or block diagrams. These computer-readable program instructions may also be stored on a computer-readable storage medium, these instructions causing a computer, a programmable data processing apparatus, and/or other devices to function in a particular manner. Accordingly, the computer-readable medium storing the instructions constitutes an article of manufacture that includes instructions for implementing various aspects of the functions/actions specified in one or more blocks of the flowcharts and/or block diagrams.

The computer-readable program instructions may also be loaded onto a computer, other programmable data processing apparatus, or other devices, causing a series of operational steps to be performed on the computer, other programmable data processing apparatus, or other devices to produce a computer-implemented process, such that the instructions executed on the computer, other programmable data processing apparatus, or other devices implement the functions/actions specified in one or more blocks of the flowcharts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner, and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various embodiments disclosed in this text.

## Claims

1. A method (200) for controlling a vehicle, comprising:
determining (202) a target torque provided by a first motor in a first electric drive axle in response to the first electric drive axle of a plurality of electric drive axles of the vehicle performing a gearing operation;
adjusting (204) a torque provided by a second motor in a second electric drive axle of the plurality of electric drive axles not performing the gearing operation based on the target torque; and
controlling (206) the vehicle based on the target torque and the adjusted torque.

2. The method (200) according to claim 1, wherein adjusting the torque provided by the second motor in the second electric drive axle of the plurality of electric drive axles not performing a gearing operation comprises:
obtaining a total wheel end torque for driving the vehicle; and
adjusting the torque provided by the second motor in the second electric drive axle based on the total wheel end torque and the target torque.

3. The method (200) according to claim 2, wherein obtaining the total wheel end torque for driving the vehicle comprises:
receiving the total wheel end torque for driving the vehicle from a vehicle controller of the vehicle.

4. The method (200) according to claim 2, wherein adjusting the torque provided by the second motor in the second electric drive axle based on the total wheel end torque and the target torque comprises:
determining a first gear being used in the first electric drive axle;
determining a first wheel end torque provided by the first electric drive axle based on the first gear and the target torque; and
adjusting the torque provided by the second motor in the second electric drive axle based on the first wheel end torque and the total wheel end torque.

5. The method (200) according to claim 4, wherein determining the first wheel end torque provided by the first electric drive axle comprises:
determining a first speed ratio for the first gear based on the first gear; and
determining the first wheel end torque provided by the first electric drive axle based on the first speed ratio and the target torque.

6. The method (200) according to claim 4, wherein adjusting the torque provided by the second motor in the second electric drive axle based on the first wheel end torque and the total wheel end torque comprises:
determining a second wheel end torque that may be provided by the second electric drive axle based on the first wheel end torque and the total wheel end torque; and
adjusting the torque provided by the second motor in the second electric drive axle based on the second wheel end torque.

7. The method (200) according to claim 6, wherein adjusting the torque provided by the second motor in the second electric drive axle based on the second wheel end torque comprises:
determining a second gear being used in the second electric drive axle; and
adjusting the torque provided by the second motor in the second electric drive axle based on the second wheel end torque and the second gear.

8. The method (200) according to claim 7, wherein the target torque is a first torque, and adjusting the torque provided by the second motor in the second electric drive axle based on the second wheel end torque and the second gear comprises:
determining a second speed ratio for the second gear based on the second gear; and
determining a second torque to be provided by the second motor of the second electric drive axle based on the second speed ratio and the second wheel end torque; and
adjusting the torque provided by the second motor based on the second torque.

9. The method (200) according to claim 8, wherein adjusting the torque provided by the second motor based on the second torque comprises:
determining whether the second torque exceeds a threshold torque for the second motor; and
adjusting the torque provided by the second motor in the second electric drive axle to the second torque in response to the second torque not exceeding the threshold torque.

10. The method (200) according to claim 9, wherein adjusting the torque provided by the second motor based on the second torque further comprises:
adjusting the torque provided by the second motor in the second electric drive axle to the threshold torque in response to the second torque exceeding the threshold torque.

11. The method (200) according to claim 1, further comprising:
in response to the first electric drive axle completing the gearing operation, controlling the second electric drive axle to perform the gearing operation.

12. An apparatus (600) for controlling a vehicle, comprising:
a target torque determination module (602) configured to determine a target torque provided by a first motor in a first electric drive axle in response to the first electric drive axle of a plurality of electric drive axles of the vehicle performing a gearing operation;
a torque adjustment module (604) configured to adjust a torque provided by a second motor in a second electric drive axle of the plurality of electric drive axles not performing the gearing operation based on the target torque; and
a vehicle control module (606) configured to control the vehicle based on the target torque and the adjusted torque.

13. A controller (700), comprising:
at least one processor, and
a memory, coupled to the at least one processor, and having instructions stored thereon that, when executed by the at least one processor, cause the controller to perform the method according to any one of claims 1 to 11.

14. A vehicle, comprising a first electric drive axle, a second electric drive axle, and the controller according to claim 13.

15. A machine program product, comprising machine-executable instructions, wherein the machine-executable instructions are executed by a processor to implement the method according to any one of claims 1 to 11.
